# EUROPÄISCHE PATENTSCHRIFT

(11) **EP 1 339 989 B1**
(45) Veröffentlichungstag und Bekanntmachung des Hinweises auf die Patenterteilung: **06.07.2005**
(21) Anmeldenummer: 01994687.0
(22) Anmeldetag: 21.11.2001
(51) Int. Cl.: F16B 5/06, F16B 2/24

(54) **KLAMMERSYSTEM ZUR BEFESTIGUNG EINES ANBAUTEILS AN EINEM TRÄGERTEIL**
CLIP SYSTEM FOR FIXING AN ATTACHMENT TO A SUPPORT PART
SYSTEME DE PINCE PERMETTANT DE FIXER UNE PIECE RAPPORTEE SUR UNE PARTIE DE SUPPORT

(30) Priorität: 30.11.2000 DE 10059522
(43) Veröffentlichungstag der Anmeldung: 03.09.2003
(73) Patentinhaber: A. Raymond & Cie, 38019 Grenoble-Cedex (FR)
(72) Erfinder: BODO, Giuseppe, I-13100 Vercelli (IT)
(74) Vertreter: Rüttgers, Joachim, Dr.
(86) Internationale Anmeldenummer: PCT/EP2001/013489
(87) Internationale Veröffentlichungsnummer: WO 2002/044570

(56) Entgegenhaltungen:
- EP-A- 0 855 523
- DE-C- 619 487
- US-A- 3 746 378

## Beschreibung

Die Erfindung betrifft ein Klammersystem zur Befestigung eines Anbauteils an einem Trägerteil, bestehend aus einer Verbindungsklammer aus federndem Material, einem Anbauteil und einem Trägerteil mit einer Öffnung, wobei die Verbindungsklammer an einer Halterippe des Anbauteils festklemmbar und in eine im wesentlichen rechteckige Öffnung des Trägerteils einsteckbar ist und sich dabei derart federnd verformt, dass diese Klammer an den Kanten dieser Öffnung mit dem Trägerteil in eine kraftschlüssige Verbindung gelangt, wobei die Verbindungsklammer im nicht montierten Zustand zwei von einem Mittelsteg aus aufeinander zu gebogene Federschenkel besitzt, die schräg aufeinander zu gebogene Krallen aufweisen, welche nach dem Einführen der Halterippe federnd an deren Seitenflächen anliegen.

Durch die DE 32 45 056 A1 ist eine elastische Klemme aus Federstahl für den genannten Zweck bekannt. Diese weist drei Schenkelpaare unterschiedlicher Länge auf, die von einer Mittellinie ausgehend so aufeinander zurückgebogen sind, dass sie in Seitenansicht die Form eines Rhombus bilden. Die freien Enden der Schenkelpaare kommen im unmontierten Zustand der Klemme aneinander zur Anlage und sind danach nochmals winklig abgebogen, wodurch das Aufschieben der Klemme auf die Halterippe des Anbauteils erleichtert wird. Indem dabei die freien Enden der Schenkelpaare auseinander gespreizt werden, kommen diese klemmend an den Seitenflächen der Halterippe zur Anlage. Um die Halterung der Klemme auf der Halterippe zu sichern, sind die beiden äußeren, deutlich kürzeren Schenkelpaare vorgesehen, die in ihrem Anlagebereich an der Halterippe zusätzlich nach innen gebogene Krallen aufweisen.

Dem eigentlichen Zweck der Klemme, nämlich der Befestigung des Anbauteils an einem Trägerteil, dient nur das mittlere, längere Schenkelpaar. Dazu ist die mittlere Breite des längeren Schenkelpaars um ein bestimmtes Maß größer als die entsprechende lichte Weite einer schlitzförmigen Öffnung in dem Trägerteil. Zur Befestigung des Anbauteils wird dessen Halterippe mit der darauf montierten Klemme unter elastischer Verformung des mittleren Schenkelpaares in die schlitzförmige Öffnung des Trägerteils eingeschoben, bis die einander gegenüberliegenden, stumpfwinkligen Bereiche des Schenkelpaares hinter der Innenkante der Öffnung liegen und die Schenkelflächen nach dem Zurückfedern an der Innenkante anliegen.

Die Ausgestaltung dieser Klemme garantiert keinen wirksamen sicheren Sitz auf der Halterippe des Anbauteils, da sie dort nur durch die einwärts gerichtete Andrückkraft des Schenkelpaares gehalten wird. Aus diesem Grunde mussten auch die seitlichen kürzeren Schenkelpaare mit ihren Haltekrallen zusätzlich vorgesehen werden. Da die Haltekrallen durch die relativ kurze Federlänge der Klemmschenkel dem Aufbiegen einen großen Widerstand entgegensetzen, ist ein relativ großer Kraftaufwand erforderlich, um die Halterippe zwischen den Haltekrallen hindurch bis zum Anschlag im Grund der Klemme zu drücken.

Aufgabe der Erfindung ist es, ein vielseitig verwendbares und montagefreundliches Klammersystem zur Verbindung von Bauteilen zu schaffen, bei welchem mit möglichst einfachen Mitteln ein wirklich sicherer Sitz der Klammer auf dem Trägerteil und somit eine sichere Verbindung des Bauteils mit dem Trägerteil erreicht werden.

Diese Aufgabe wird erfindungsgemäß dadurch gelöst, dass bei dem vorerwähnten und beispielsweise durch EP-A-855 523 bekannten Klammersystem die freien Enden der Federschenkel derart nach außen und rückwärts gebogen sind, dass die dadurch gebildeten äußeren Schenkel zwischen den Kanten der Öffnung federnd zusammendrückbar und einrastbar sind, und dass der Mittelsteg eine Aussparung zum Einführen der Halterippe besitzt

Durch die erfindungsgemäße Ausbildung der Verbindungsklammer wird auf einfache Weise erreicht, dass die Halterippe sich leicht durch die Aussparung zwischen den Krallen hindurch drücken lässt und beim Einführen der Klammer in die Öffnung des Trägerteils die Krallen durch das Zusammendrücken der rückwärts gebogenen Federschenkel zusätzlich an die Seitenwände der Halterippe angedrückt werden, so dass die Klemmwirkung der Krallen noch verstärkt wird. Hierdurch werden gegenüber dem vorgenannten Stand der Technik noch höhere Haltekräfte und damit zweifellos ein noch sicherer Sitz der Klammer erreicht.

Diese Wirkung wird noch verstärkt, wenn die Krallen kurz vor dem freien Ende der Federschenkel angeordnet sind. Durch die Ausnutzung der vollen Biegelänge der inneren Federschenkel lassen sich die Krallen noch leichter auseinanderbiegen und andererseits beim Einführen der Verbindungsklammer fester an die Seitenwände der Halterippe andrücken, weil die von den Rastkanten ausgehende zusätzliche Andrückkraft auf eine kürzere Schenkellänge ausgeübt wird.

Nach einer vorteilhaften Weiterbildung der Erfindung ist in den inneren Federschenkeln auf beiden Seiten der Aussparung von deren Kanten aus je ein Schlitz ausgespart, welcher zur Aufnahme einer entsprechend starken Verstärkungsrippe zwischen Bauteil und Halterippe dient und dadurch einen stabilen Kontakt zwischen der Verbindungsklammer und der Halterippe gewährleistet.

Die äußeren Schenkel sind zweckmäßigerweise aus drei in stumpfen Winkeln abwechselnd nach innen und außen abgebogenen Abschnitten gebildet, wobei die Knicklinie zwischen dem zweiten und dem dritten Abschnitt jeweils eine Rastrille für die Rastkanten der Öffnung bildet. Hierbei ist es zur Erhöhung der Flexibilität des ersten Abschnitts von Vorteil, wenn dieser eine bis über das rundgebogene Ende hinausreichende, im wesentlichen rechteckige Aussparung aufweist. Dies verleiht dem ersten Abschnitt der Federschenkel durch die allein verbleibenden schmalen Federstege eine größere Elastizität und läßt die Verbindungsklammer leichter in die Öffnung der Trägerplatte einführen und im Bedarfsfalle auch wieder herausziehen.

In der Zeichnung ist ein Ausführungsbeispiel des erfindungsgemäßen Klammersystems dargestellt und soll nachfolgend näher beschrieben werden.

Es zeigen
- Fig. 1: Eine beim vorliegenden Klammersystem verwendete bevorzugte Ausführungsform der Verbindungsklammer in Seitenansicht,
- Fig. 2: Die gleiche Verbindungsklammer in Vorderansicht,
- Fig. 3: Die gleiche Verbindungsklammer in Draufsicht,
- Fig. 4: Einen Schnitt durch die Verbindungsklammer gemäß IV-IV in Fig.1,
- Fig. 5: Einen Schnitt durch die Verbindungsklammer gemäß V-V in Fig.2
- Fig. 6: Ein Ausschnitt eines Anbauteils mit einer zum Einführen in die Verbindungsklammer ausgerichteten Halterippe,
- Fig. 7: Die an der Halterippe aufmontierte Verbindungsklammer im Schnitt gemäß VII - VII in Fig. 3, ausgerichtet zum Einführen in die Befestigungsöffnung eines Trägerteils und
- Fig. 8: Das gleiche Bild wie Figur 7 nach der erfindungsgemäß hergestellten Verbindung zwischen Anbauteil und Trägerteil.

Das vorliegende Klammersystem dient zur Befestigung eines Anbauteils **6** an einem Trägerteil **7** mittels einer Verbindungsklammer **1,** welche an einer Halterippe **8** des Anbauteils **6** festklemmbar ist. Die so festgeklemmte Verbindungsklammer **1** wird sodann in einer im wesentlichen rechteckigen Öffnung **9** des Trägerteils **7** eingesteckt. Dabei verformt sich die Verbindungsklammer **1** derart federnd, daß die Klammer **1** an den Kanten **10** dieser Öffnung **9** mit dem Trägerteil **7** in eine kraftschlüssige Verbindung gelangt.

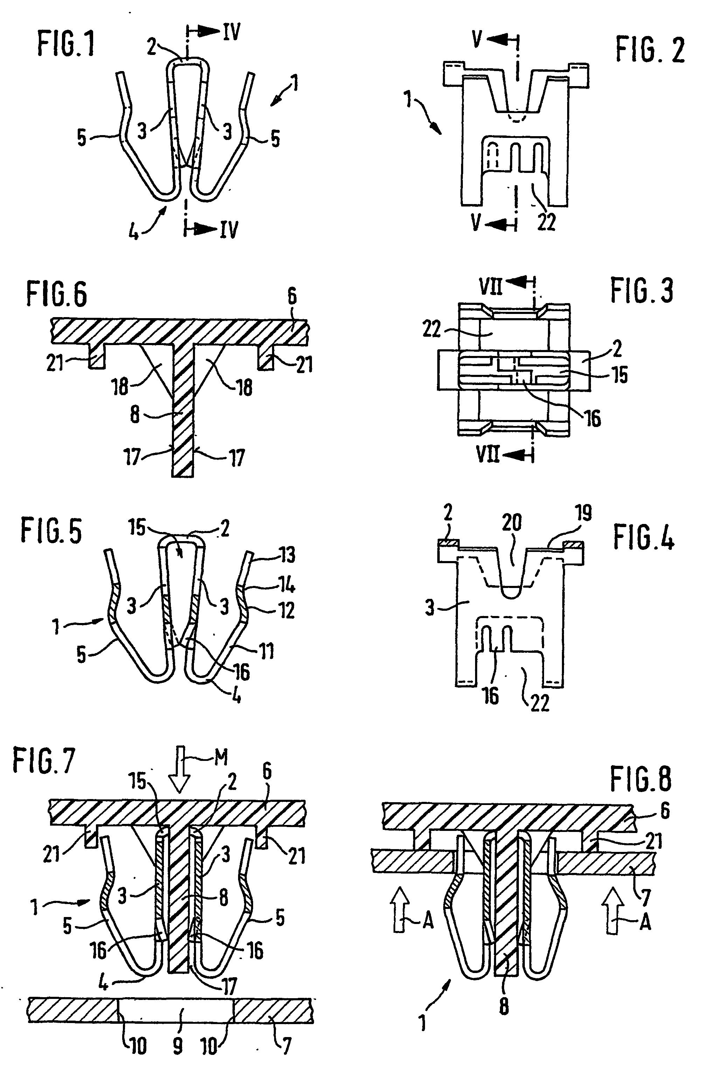

Wie aus den **Figuren 1 bis 4** erkennbar, ist die Verbindungsklammer **1** aus einem ursprünglich rechteckigen Stück Federstahlblech gefertigt, wobei die Verbindungsklammer **1** im unmontierten Zustand zwei von einem Mittelsteg **2** aus aufeinander zugebogene Federschenkel **3** aufweist. Diese sind an ihren freien , sich fast berührenden Enden **4** derart nach außen und rückwärts gebogen, daß die dabei gebildeten äußeren Schenkel **5** in der Seitenansicht gemäß **Fig. 1** ein keilförmiges Profil bilden.

Die äußeren Federschenkel **5** sind, wie aus **Figur 5** erkennbar, aus drei Abschnitten gebildet, von denen der erste Abschnitt **11** vom unteren freien Ende **4** aus spitzwinklig nach außen gebogen ist. Der zweite, mittlere Abschnitt **12** schließt sich daran im stumpfen Winkel nach innen an, während der dritte Abschnitt **13** nochmals im stumpfen Winkel nach außen gebogen ist. Hierbei bildet die Knicklinie zwischen dem zweiten Abschnitt **12** und dem dritten Abschnitt **13** jeweils eine Rastrille **14,** welche sich nach dem Einführen der Verbindungsklammer **1** in die Öffnung **9** des Trägerteils **7** an deren Rastkanten **10** anlegt bezw. einrastet.

Zur sicheren und dauerhaften Verbindung der Verbindungsklammer **1** mit dem Anbauteil **6** besitzt letzteres eine Halterippe **8**, während im Mittelsteg **2** der Verbindungsklammer **1** eine Aussparung **15** eingeschnitten ist, welche in den lichten Maßen dem Querschnitt der Halterippe **8** entspricht. Außerdem sind kurz vor dem unteren Ende **4** der Federschenkel **3** schräg aufeinander zugebogene Krallen **16** ausgeformt, weiche sich federnd an den Seitenflächen **17** der Halterippe **8** anlegen.

Die Halterippe **8** ist mittig nach beiden Seiten mit einer dreieckigen Verstärkungsrippe **18** gegen das Anbauteil **6** abgestützt. Dementsprechend ist in den inneren Federschenkeln **3** auf beiden Seiten der Aussparung **15** von deren Kanten **19** aus je ein Schlitz **20** ausgestanzt, welcher nach dem Einführen der Halterippe **8** in die Verbindungsklammer **1** zur Aufnahme der Verstärkungsrippe **18** dient.

Beiderseits der Halterippe **8** sind im Abstand von dieser außerdem noch Stützrippen **21** an dem Anbauteil **6** angeformt, welche beim Einrasten der Rastrille **14** in der Öffnung **9** gleichzeitig auf dem Trägerteil **7** zur Anlage kommen und somit als Abstandshalter zwischen dem Trägerteil **7** und dem Anbauteil **6** wirken. Der Abstand zwischen den beiden Stützrippen **21** ist so bemessen, daß die oberen Abschnitte **13** der äußeren Federschenkel **5** im entspannten Zustand der Verbindungsklammer **1** nach dem Einführen der Halterippe **8** zwischen den Stützrippen **21** genügend Platz haben.

Um den ersten Abschnitt **11** der äußeren Federschenkel **5** möglichst biegeelastisch auszubilden, weist dieser Abschnitt eine im wesentlichen rechteckige Ausstanzung **22** auf, welche sich bis über das rund gebogene Ende **4** hinaus in den inneren Federschenkel **3** erstreckt.

Die vorteilhafte Wirkung des erfindungsgemäßen Klammersystems wird beim Betrachten der **Figuren 5 bis 8** deutlich. Nachdem die Halterippe **8** des Anbauteils **6** von oben in die Aussparung **15** des Mittelstegs **2** in Richtung des Pfeiles "**M"** einge führt und bis zur Auflage des Anbauteils **6** auf dem Mittelsteg **2** zwischen den Federschenkeln **3** und Krallen **16** hindurchgedrückt worden ist **(Fig. 7),** kann das Trägerteil **7** mit seiner Öffnung **9** in Richtung der Pfeile "**A"** über die Verbindungsklammer **1** gedrückt werden. Die äußeren Federschenkel **5** werden dabei zunächst zusammengedrückt und federn nach dem Durchtritt der mittleren Abschnitte **12** durch die Öffnung **9** wieder auseinander, bis die Rastrillen **14** an den Kanten **10** einrasten und das Anbauteil **6** mit den Stützrippen **21** auf dem Trägerteil **7** aufliegt (**Fig. 8**).

### Bezugszeichenliste

- 1: Verbindungsklammer
- 2: Mittelsteg
- 3: Federschenkel
- 4: Freies Ende
- 5: Äußere Schenkel
- 6: Anbauteil
- 7: Trägerteil
- 8: Halterippe
- 9: Öffnung
- 10: Rastkanten
- 11: Erster Abschnitt
- 12: Zweiter Abschnitt
- 13: Dritter Abschnitt
- 14: Rastrille
- 15: Aussparung
- 16: Krallen
- 17: Seitenflächen
- 18: Verstärkungsrippe
- 19: Kante (der Aussparung)
- 20: Schlitz
- 21: Stützrippe
- 22: Ausstanzung

## Patentansprüche

1. Klammersystem zur Befestigung eines Anbauteils an einem Trägerteil, bestehend aus einer Verbindungsklammer (1) aus federndem Material, einem Anbauteil (6) und einem Trägerteil (7) mit einer Öffnung (9), wobei die Verbindungsklammer (1) an einer Halterippe (8) des Anbauteils (6) festklemmbar und in die im wesentlichen rechteckige Öffnung (9) des Trägerteils (7) einsteckbar ist und sich dabei derart federnd verformt, dass die Klammer (1) an den Kanten (10) dieser Öffnung (9) mit dem Trägerteil (7) in eine kraftschlüssige Verbindung gelangt, wobei die Verbindungsklammer (1) im nicht montierten Zustand zwei von einem Mittelsteg (2) aus aufeinander zu gebogene Federschenkel (3) besitzt, die schräg aufeinander zu gebogene Krallen (16) aufweisen, welche nach dem Einführen der Halterippe (8) federnd an deren Seitenflächen (17) anliegen,
**dadurch gekennzeichnet**, die freien Enden (4) der Federschenkel (3) derart nach außen und rückwärts gebogen sind, dass die **dadurch** gebildeten äußeren Schenkel (5) zwischen den Kanten (10) der Öffnung (9) federnd zusammendrückbar und einrastbar sind, und dass der Mittelsteg (2) eine Aussparung (15) zum Einführen der Halterippe (8) besitzt.

2. Klammersystem nach Anspruch 1, **dadurch gekennzeichnet, daß** die schräg aufeinanderzu gebogenen Krallen (16) kurz vor dem freien Ende (4) der inneren Federschenkel (3) angeordnet sind.

3. Klammersystem nach Anspruch 1 oder 2, **dadurch gekennzeichnet, daß** in den inneren Federschenkeln (3) auf beiden Seiten der Aussparung (15) von deren Kanten (19) aus je einen Schlitz (20) ausgestanzt ist, welcher zur Aufnahme einer entsprechend starken Verstärkungsrippe (18) zwischen Anbauteil (6) und Halterippe (8) dient.

4. Klammersystem nach einem der Ansprüche 1 bis 3, **dadurch gekennzeichnet, daß** die äußeren Federschenkel (5) aus drei Abschnitten gebildet sind, von denen der erste Abschnitt (11) vom freien Ende (4) aus spitzwinklig nach außen abgebogen ist, der zweite Abschnitt (12) im stumpfen Winkel nach innen und der dritte Abschnitt (13) anschließend nochmals im stumpfen Winkel nach außen gebogen ist, wobei die Knicklinie zwischen dem zweiten Abschnitt (12) und dem dritten Abschnitt (13) die Rastrinne (14) für die Kanten (10) der Öffnung (9) bildet.

5. Klammersystem nach Anspruch 4, **dadurch gekennzeichnet, daß** der erste Abschnitt (11) bis über das rund gebogene freie Ende (4) hinaus eine im wesentlichen rechteckige Ausstanzung (22) aufweist.

## Claims

1. A clip system for fixing an attachment member to a support portion, comprising a connecting clip (1) of resilient material, an attachment member (6) and a support portion (7) having an opening (9), wherein the connecting clip (1) can be clamped fast to a retaining rib (8) of the attachment member (6) and can be inserted into the substantially rectangular opening (9) in the support portion (7) and in that position is resiliently deformed in such a way that the clip (1) comes into force-locking relationship at the edges (10) of the opening (9) with the support portion (7), wherein in the non-mounted condition the connecting clip (1) has two spring limbs (3) which are bent towards each other from a central web (2) and which have claws (16) which are bent inclinedly towards each other and which after insertion of the retaining rib (8) bear resiliently against the side surfaces (17) thereof,
**characterised in that** the free ends (4) of the spring limbs (3) are bent outwardly and rearwardly in such a way that the outer limbs (5) formed thereby can be resiliently compressed and are latchable between the edges (10) of the opening (9) and that the central web (2) has an aperture (15) for insertion of the retaining rib (8).

2. A clip system according to claim 1 **characterised in that** the claws (16) which are bent inclinedly towards each other are arranged shortly before the free end (4) of the inner spring limbs (3).

3. A clip system according to claim 1 or claim 2 **characterised in that** a respective slit (20) is stamped out in the inner spring limbs (3) on both sides of the aperture (15) from the edges thereof, the slit serving to receive a reinforcing rib (18) of corresponding thickness between the attachment member (6) and the retaining rib (8).

4. A clip system according to one of claims 1 to 3 **characterised in that** the outer spring limbs (5) are formed from three portions of which the first portion (11) is bent away outwardly at an acute angle from the free end (4), the second portion (12) is bent inwardly at an obtuse angle and the third portion (13) is then bent outwardly again at an obtuse angle, wherein the bend line between the second portion (12) and the third portion (13) forms the latching groove (14) for the edges (10) of the opening (9).

5. A clip system according to claim 4 **characterised in that** the first portion (11) has a substantially rectangular stamped-out aperture (22) to beyond the free end (4) which is bent in a round configuration.

## Revendications

1. Agrafe de fixation d'une pièce rapportée sur un élément faisant office de support, se composant d'une agrafe de liaison (1) réalisée dans une matière élastique, d'une pièce rapportée (6) et d'un élément faisant office de support (7) comportant une ouverture (9), l'agrafe de liaison (1) étant en l'occurrence destinée à être bloquée en position sur une nervure de retenue (8) de la pièce rapportée (6) et à être insérée dans l'ouverture de forme sensiblement rectangulaire (9) de l'élément faisant office de support et, ce faisant, se déformant par cédage élastique de telle façon que l'agrafe (1) assure, au niveau des bords (10) de cette ouverture (9), par l'action inhérence à la force qu'elle exerce, une liaison d'assemblage avec l'élément faisant office de support, l'agrafe de liaison (1) comportant en l'occurrence deux pattes élastiques (3) qui, partant d'une barrette entretoise médiane (2) sont, à l'état libre de l'agrafe, cintrées l'une vers l'autre et qui comportent des griffes de cramponnage (16) orientées l'une vers l'autre selon une disposition oblique, qui, après l'emmanchement de la nervure de retenue (8) sont, par cédage élastique, en contact d'appui contre ses faces latérales (17), **caractérisée en ce que** les extrémités libres (4) des pattes élastique (3) sont repliées vers l'extérieur et vers l'arrière dans des conditions telles que les pattes extérieures (5) ainsi formées peuvent être, par effet de cédage élastique, comprimées et engagées en position d'accrochage entre les bords (10) de l'ouverture (9) net **en ce que** la barrette entretoise médiane (2) comporte un évidement (15) pour l'introduction de la nervure de retenue (8).

2. Agrafe selon la revendication 1, **caractérisée en ce que** les griffes de cramponnage (16) orientées l'une vers l'autre selon une disposition oblique sont disposées à une courte distance de l'extrémité libre (4) des pattes élastiques intérieures (3).

3. Agrafe selon la revendication 1 ou 2, **caractérisée en ce qu'**une fente (20) est respectivement réalisée par découpage à la presse dans les pattes élastiques intérieures (3) de part et d'autre de l'évidement (15), à partir de leur bord (19), qui sert à l'emmanchement d'une nervure de renforcement d'épaisseur correspondante (18) entre la pièce rapportée (6) et la nervure de retenue (8).

4. Agrafe selon l'une des revendications 1 à 3, **caractérisée en ce que** les pattes élastiques extérieures (5) se composent de trois portions, la première portion (11) étant, depuis l'extrémité libre (4), repliée vers l'extérieur en formant un angle aigu, la deuxième portion (12) étant repliée vers l'intérieur en formant un angle obtus et la troisième portion (13) qui lui fait suite étant repliée vers l'extérieur en formant un angle obtus, l'arête de pliage qui se trouve entre la deuxième portion (12) et la troisième portion (13) définissant en l'occurrence la gorge d'encastrement (14) des bords (10) de l'ouverture (9).

5. Agrafe selon la revendication 4, **caractérisée en ce que** la première portion (11) comporte un évidement de forme sensiblement rectangulaire réalisé par poinçonnage qui s'étend jusqu'au-delà de l'extrémité libre de forme arrondie (4).
